## Europäisches Patentamt

(19) **European Patent Office**

**Office européen des brevets**

(11) Numéro de publication: **0 125 722**
**B1**

(12) FASCICULE DE BREVET EUROPEEN

(45) Date de publication du fascicule du brevet:
07.01.87

(21) Numéro de dépôt: **84200647.0**

(22) Date de dépôt: **08.05.84**

(51) Int. Cl.⁴: **H 04 L 27/00**

(54) Circuit d'égalisation adaptative et de démodulation conjointes.

(30) Priorité: **11.05.83 FR 8307910**

(43) Date de publication de la demande:
**21.11.84 Bulletin 84/47**

(45) Mention de la délivrance du brevet:
**07.01.87 Bulletin 87/2**

(84) Etats contractants désignés:
**BE CH DE FR GB IT LI NL SE**

(56) Documents cités:
**FR - A - 2 167 441**

(73) Titulaire: **Laboratoires d'Electronique et de Physique Appliquée L.E.P., 3, Avenue Descartes, F-94450 Limeil-Brévannes (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **BE CH DE GB IT LI NL SE**

(72) Inventeur: **Desperben, Lydie Société Civile S.P.I.D., 209 rue de l'Université, F-75007 Paris (FR)**
Inventeur: **Sari, Hikmet Société Civile S.P.I.D., 209 rue de l'Université, F-75007 Paris (FR)**
Inventeur: **Moridi, Said Société Civile S.P.I.D., 209 rue de l'Université, F-75007 Paris (FR)**
Inventeur: **Bonnerot, Georges Société Civile S.P.I.D., 209 rue de l'Université, F-75007 Paris (FR)**

(74) Mandataire: **Landousy, Christian et al, Société Civile S.P.I.D. 209, Rue de l'Université, F-75007 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif d'égalisation adaptative et de démodulation conjointes pour système de transmission numérique, et notamment pour des systèmes à hauts débits dans lesquels le canal de transmission n'est pas connu d'avance et/ou est susceptible de varier au cours du temps. Elle est donc applicable aux faisceaux hertziens numériques, à la transmission de données sur le réseau téléphonique commuté, à la transmission numérique sur câble (réseaux spéciaux de type Transpac, etc...).

L'introduction des égaliseurs adaptatifs dans les systèmes de transmission numériques à hauts débits pour compenser les distorsions d'amplitude et de phase du canal se poursuit depuis plusieurs années. Après leur introduction dans les systèmes de transmission de données sur le réseau téléphonique commuté, les égaliseurs adaptatifs seront prochainement utilisés dans les faisceaux hertziens numériques. Les égaliseurs retenus et utilisés en pratique ont en général l'une des deux structures suivantes: (a) filtre transversal non récursif, (b) filtre transversal ayant une partie récursive dont les entrées sont les symboles décidés antérieurement. L'adaptation de l'égaliseur au canal et à ses variations éventuelles dans le temps se fait en général par la méthode du gradient stochastique de l'erreur quadratique moyenne. Les deux structures d'égaliseur mentionnées ci-dessus et leur adaptation ont été décrites dans de nombreux articles dont: C. Macchi et al., «Récepteurs adaptatifs pour transmission de données à grande vitesse», Annales des Télécom., tome 30, n° 9-10, sept.-oct. 1975.

Les égaliseurs sont souvent en bande de base, et opèrent donc sur des signaux démodulés. D'autres part, les systèmes à haute efficacité spectrale utilisent des modulations de deux porteuses en quadrature. Dans ces systèmes, pour compenser l'interférence intersymboles dans les voies en phase et en quadrature et l'interférence entre ces deux voies, l'égaliseur doit avoir quatre branches dont chacune est constituée d'un filtre transversal; s'il y en a une, la partie récursive comporte également quatre filtres transversaux.

Un autre inconvénient des égaliseurs en bande de base apparaît lorsqu'on considère la synchronisation de porteuse nécessaire pour la démodulation. En effet, la récupération de porteuse pour les systèmes de modulation de deux porteuses en quadrature utilise les signaux en bande de base et des décisions (voir l'article de A. Leclert et P. Vandamme, paru dans la revue IEEE Transactions, on Communication, volume COM-31, n° 1, janvier 1983, pages 130 à 136). On a alors deux possibilités: (a) soit on utilise les signaux à la sortie du démodulateur et les décisions à ce niveau, dans un tel cas on a un système peu robuste, car très sensible aux distorsions du canal, (b) soit on utilise les deux sorties de l'égaliseur et ses décisions, dans un tel cas le système n'est pas sensible aux distorsions du canal. Mais, dans ce dernier cas, le boucle de récupération de porteuse contient un retard supplémentaire qui est le temps de propagation des signaux dans l'égaliseur et qui, si l'égaliseur est très long (ce qui est le cas en transmission de données sur câble), tend à rendre instable la boucle de récupération de porteuse. La boucle ne sera alors pas capable de poursuivre de grands écarts de fréquence (comme le montre par exemple l'article de R.W. Chang et R. Srinivasagopalan, «Carrier recovery for data communication systems with adaptive equalization», paru dans IEEE Transactions on Communication, volume COM-28, n° 8, août 1980, page 1142 à 1153). Le même problème se rencontre dans les égaliseurs numériques, même s'ils ne comportent pas beaucoup de coefficients, car le temps de propagation n'est pas négligeable.

Devant ce problème de retard dans les égaliseurs en bande de base, des égaliseurs en fréquence intermédiaire dits F.I. ont été introduits (D.D. Falconer, «Jointly Adaptative Equalization and Carrier Recovery in Two-Dimensional Digital Communication Systems», BSTJ, vol. 55, n° 3, March 1976, pp. 317-334). Dans les systèmes avec égalisation en F.I., la récupération de porteuse est robuste car on a alors le double avantage d'utiliser des signaux égalisés et de s'affranchir du retard de l'égalisateur en asservissement de la porteuse. L'égaliseur F.I. de Falconer, comme les égaliseurs en bande de base, utilise le critère de l'erreur quadratique moyenne pour s'adapter. Son inconvénient est qu'il nécessite l'échantillonnage, à la cadence symbole, du signal F.I. et, pour son adaptation, la remodulation des décisions de l'égaliseur. Or l'échantillonnage de ces deux signaux F.I. peut poser des problèmes délicats de réalisation lorsque la fréquence porteuse F.I. est élevée. L'échantillonnage du signal F.I. est alors très sensible à la gigue sur l'instant d'échantillonnage. Dans tous les cas, il est plus difficile d'échantillonner un signal F.I. que d'échantillonner un signal en bande de base associé.

Le but de l'invention est donc de proposer un dispositif d'égalisation adaptative opérant sur le signal à fréquence intermédiaire non échantillonné mais ayant en même temps la fonction d'un démodulateur et dont la sortie est donc en bande de base.

L'invention concerne à cet effet un dispositif d'égalisation adaptative et de démodulation conjointes pour système de transmission numérique, caractérisé en ce qu'il comprend:

(1) une première voie en phase prévue en sortie du canal de transmission du système et dont la structure est celle d'un filtre transversal non récursif à n branches et n-1 circuits à retard entre les entrées de ces branches, ces n branches comprenant chacune en série:

(a) un mélangeur;

(b) un filtre passe-bas;

(c) un multiplicateur, la sortie de ces branches étant reliée à un additionneur suivi d'un circuit d'échantillonnage puis d'un circuit de comparaison pour décider des symboles appelés $a_k$ à émettre en sortie de cette voie en phase et du dispositif;

(2) en parallèle sur cette première voie, une deuxième voie en quadrature également à structure de filtre transversal non récursif à n branches et n-1 circuits à retard entre les entrées de ces branches, ces n branches comprenant de même chacune en série:

(d) un mélangeur;

(e) un filtre passe-bas;

(f) un multiplicateur, la sortie de ces n branches étant reliée à un additionneur suivi d'un circuit d'échantillonnage puis d'un circuit de comparaison pour décider des symboles appelés $\hat{b}_k$ à émettre en sortie de cette voie en quadrature et du dispositif; les multiplicateurs des première et deuxième voies ainsi prévues étant placés dans chaque branche soit en tête, avant les mélangeurs correspondants, soit en sortie des filtres passe-bas;

(3) une troisième voie d'asservissement comprenant:

(g) deux circuits de soustraction pour connaître les différences $e'_k$ et $e''_k$ entre les signaux avant et après décision dans les circuits de comparaison;

(h) un oscillateur à commande par la tension délivrant un signal de type sin $(\omega_o t + \phi)$ où $\omega_o$ correspond à la fréquence de la porteuse;

(i) en sortie de cet oscillateur, n premiers déphaseurs en parallèle, dont la sortie délivre respectivement sur les n deuxièmes entrées des mélangeurs de la voie en phase un signal de démodulation de type sin $(\omega_o t + \phi + \theta_m)$ où $\theta_m$ est le déphasage pour la $(m + 1)$ième branche et où m varie de o à n-1 (m prend donc n valeurs distinctes);

(j) également en sortie de l'oscillateur à commande par la tension, un déphaseur de $\pi/2$ suivi de n deuxième déphaseurs en parallèle, dont la sortie délivre sur les n deuxièmes entrées des mélangeurs de la voie en quadrature un signal de démodulation de type cos $(\omega_o t + \phi + \theta_m)$;

(k) un circuit d'asservissement de l'oscillateur à commande par la tension, des 2n déphaseurs et des 2n multiplicateurs.

L'invention concerne également, en variante, un dispositif similaire mais dans lequel la troisième voie d'asservissement comprend:

(g) deux circuits de soustraction pour connaître les différences $e'_k$ et $e''_k$ entre les signaux avant et après décision dans les circuits de comparaison;

(h) n oscillateurs à commande par la tension, dont la sortie délivre directement sur les n deuxièmes entrées des mélangeurs de la voie en phase un signal de démodulation de type sin $(\omega_o t + \phi + \theta_m)$ où $\omega_o$ correspond à la fréquence de la porteuse, où $\theta_m$ est le déphasage pour la $(m + 1)$ième branche et où m varie de 0 à n-1, et, par l'intermédiaire d'un déphaseur de $\pi/2$, sur les n deuxièmes entrées des mélangeurs de la voie en quadrature, un signal de démodulation de type cos $(\omega_o t + \phi + \theta_m)$.

(i) un circuit d'asservissement des n oscillateurs à commande par la tension et des 2n multiplicateurs.

Le dispositif ainsi proposé présente, dans l'un ou l'autre des deux modes de réalisation, les avantages suivants: simplicité d'une structure à deux voies au lieu de quatre dans l'égaliseur en bande de base ou l'égaliseur en fréquence intermédiaire de Falconer, asservissement de la boucle de récupération de porteuse par des signaux égalisés, compensation de la plus grande partie du retard de l'égaliseur avec par conséquent, pour la boucle de récupération de porteuse, la possibilité de poursuivre de plus grands écarts de fréquence sans atteindre le seuil d'instabilité, absence d'échantillonnage de signaux en fréquence intermédiaire ou de remodulation des décisions. Plus brièvement, ce dispositif offre donc des avantages de moindre sensibilité aux erreurs d'échantillonnage par rapport à l'égaliseur en fréquence intermédiaire, de meilleures performances (moindre retard dans la boucle) par rapport à l'égaliseur en bande de base, et de plus grande simplicité de mise en œuvre par rapport à l'un et l'autre.

Les particularités de l'invention apparaîtront maintenant de façon plus détaillée dans la description qui suit et dans les dessins annexés, donnés à titre d'exemple non limitatifs et dans lesquels:

— la figure 1a montre un premier mode de réalisation du dispositif selon l'invention, et la figure 1b le circuit d'asservissement prévu dans ce mode de réalisation;

— la figure 2 illustre sur un seul d'entre eux le remplacement des multiplicateurs analogiques du mode de réalisation de la figure 1a par des multiplicateurs à commande numérique;

— la figure 3 montre un deuxième mode de réalisation du dispositif selon l'invention.

Avant de décrire ce dispositif selon l'invention, on rappellera que, lorsqu'on utilise comme procédé de transmission la modulation d'amplitude de deux porteuses en quadrature, le signal reçu est de la forme:

$$R (t) = A (t) \cdot \sin \omega_o t + B (t) \cdot \cos \omega_o t \qquad (1)$$

où A (t) et B (t) sont des signaux basse fréquence devant la fréquence des deux porteuses sin $\omega_o t$ et cos $\omega_o t$. Ces signaux sont reliés aux symboles émis par des relations du type:

$$A (t) = \sum_k [a_k h' (t-kT) - b_k h'' (t-kT)] \qquad (2)$$

$$B (t) = \sum_k [b_k h' (t-kT) + a_k h'' (t-kT)] \qquad (3)$$

dans lesquelles h' (t) et h'' (t) sont les parties respectivement réelle et imaginaire de la réponse impulsionelle complexe du canal de transmission, et dans lesquelles les termes $a_k$ et les termes $b_k$ sont les trains de symboles modulant à la fréquence 1/T les deux porteuses sin $\omega_o t$ et cos $\omega_o t$ respectivement (T = période des symboles).

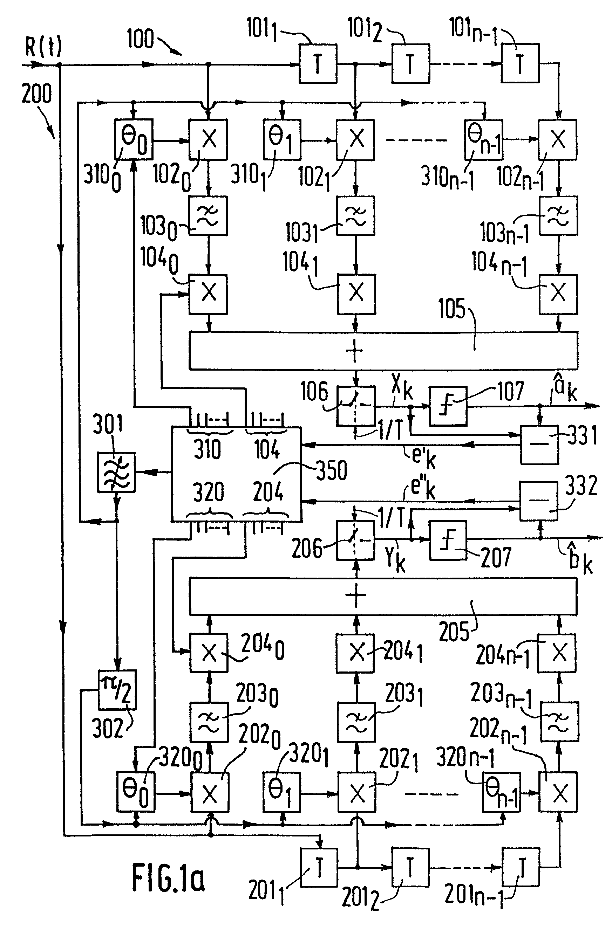

Dans le mode de réalisation proposé sur la figure 1a, le dispositif d'égalisation selon l'invention a une structure de filtre transversal non récursif dans laquelle, plus précisément, le signal R(t) de sortie du canal de transmission, qui constitue le signal d'entrée du dispositif d'égalisation, est fourni d'une part à une voie en phase 100 et d'autre part à une voie en quadrature 200 comprenant chacune un filtre transvesal non récursif, à n branches et (n-1) circuits à retard $101_1$ à $101_{n-1}$ et $201_1$ à $201_{n-1}$ entre les entrées de ces branches. Le retard apporté par ces circuits est ici égal à T, l'intervalle intersymboles, mais pourrait avoir une valeur inférieure, par exemple T/2, sans que l'invention s'en trouve limitée.

Dans le filtre transversal de la voie en phase 100, le signal à l'entrée de la $(m + 1)$ième branche est:

$$R(t-mT) = A(t-mT) \cdot \sin \omega_o (t-mT)$$

$$+ B(t-mT) \cdot \cos \omega_o (t-mT) \qquad (4)$$

Ce signal est fourni à un mélangeur 102, qui reçoit sur une autre entrée un signal de démodulation $\sin(\omega_o t + \phi + \theta_m)$ fourni par une voie d'asservissement décrite plus loin, puis à un filtre passe-bas 103, dont le signal de sortie est donné par:

$$P_m(t) = A(t-mT) \cdot \cos(\phi + \theta_m + \omega_o mT)$$

$$+ B(t-mT) \cdot \sin(\phi + \theta_m + \omega_o mT) \quad (5)$$

Ce signal est à son tour fourni à un multiplicateur 104 délivrant un signal:

$$X_m(t) = r_m \cdot P_m(t) \quad (6)$$

qui est envoyé vers l'une des n entrées d'un additionneur 105, en sortie duquel est disponible le signal de sortie du filtre transversal de la voie en phase 100 (comme cette voie comprend n branches, sont prévus bien entendu n mélangeurs $102_o$ à $102_{n-1}$ n filtres passe-bas $103_o$ à $103_{n-1}$ et n multiplicateurs $104_o$ à $104_{n-1}$. Ce signal de sortie de l'additionneur 105 et du filtre:

$$X(t) = \sum_{m=0}^{m=n-1} X_m(t) \quad (7)$$

est alors échantillonné à la cadence $1/T$ dans un circuit d'échantillonnage 106, et les échantillons ainsi formés sont comparés à des seuils dans un circuit de comparaison 107 pour décider des symboles $\hat{a}_k$ émis sur la voie en phase 100.

De la même manière, dans le filtre transversal de la voie en quadrature 200, le signal à l'entrée de la $(m+1)$ième branche traverse un mélangeur 202 et, après démodulation par le signal $\cos(\omega_o t + \phi + \theta_m)$ également fourni par ladite voie d'asservissement, un filtre passe-bas 203 et un multiplicateur 204, la sortie des circuits 203 et 204 étant donc:

$$Q_m(t) = -A(t-mT) \cdot \sin(\phi + \theta_m + \omega_o mT)$$

$$+ B(t-mT) \cdot \cos(\phi + \theta_m + \omega_o mT) \quad (8)$$

et

$$Y_m(t) = r_m \cdot Q_m(t) \quad (9)$$

Un additionneur 205 regroupe les sorties des n branches en délivrant un signal:

$$Y(t) = \sum_{m=0}^{m=n-1} Y_m(t) \quad (10)$$

qui est échantillonné à la même cadence $1/T$ dans un circuit 206, les échantillons délivrés par ce circuit étant comparés à des seuils dans un circuit 207 pour décider des symboles $\hat{b}_k$ émis sur la voie en quadrature 200 (la voie en quadrature comprenant aussi n branches, la remarque faite ci-dessus relativement au nombre des circuits s'applique ici identiquement).

Le signal de démodulation est fourni à chacune de ces voies en phase et en quadrature 100 et 200 par une voie d'asservissement 300 qui comprend un oscillateur 301 à commande par la tension, 2n déphaseurs $310_o$ à $310_{n-1}$ et $320_o$ à $320_{n-1}$, et un circuit d'asservissement de cet oscillateur, de ces 2n déphaseurs et des 2n multiplicateurs $104_o$ à $104_{n-1}$ et $204_o$ à $204_{n-1}$. Les n déphaseurs $310_o$ à $310_{n-1}$ de la voie en phase 100 sont alimentés en parallèle directement par l'oscillateur 301 et leur sortie est reliée à la deuxième entrée du mélangeur correspondant 102, tandis que les n déphaseurs $320_o$ à $320_{n-1}$ de la voie en quadrature 200, alimentés aussi en parallèle par l'oscillateur 301 mais après traversée d'un déphaseur 302 de $\pi/2$, ont leur sortie reliée à la deuxième entrée des mélangeurs correspondants $202_o$ à $202_{n-1}$; ces déphaseurs sont ici soit des circuits capacitifs, soit, de façon plus simple, des circuits à retards pouvant être commandés.

L'asservissement de l'oscillateur 301 est obtenu en utilisant comme critère la recherche du minimum de l'erreur quadratique moyenne J, donnée par:

$$J = E(e'^2_k + e''^2_k) \quad (11)$$

le symbole E désignant l'espérance mathématique et les termes $e'_k$ et $e''_k$ étant donnés par:

$$e'_k = X_k - \hat{a}_k \quad (12)$$

$$e''_k = Y_k - \hat{b}_k \quad (13)$$

où, $t_o$ étant l'instant d'échantillonnage, on utilise les notations:

$$X_k = X(t)_{t = kT + t_o}$$

$$Y_k = Y(t)_{t = kT + t_o}$$

Le gradient de J par rapport à $r_m$ s'écrit:

$$\frac{\partial J}{\partial r_m} = 2E\left(e'_k \frac{\partial e'_k}{\partial r_m} + e''_k \frac{\partial e''_k}{\partial r_m}\right) \quad (14)$$

ou encore:

$$\frac{\partial J}{\partial r_m} = 2E(e'_k p^k_m + e''_k q^k_m) \quad (15)$$

avec

$$p^k_m = [P_m(t)]_{t = kT + t_o} \text{ et } q^k_m = [Q_m(t)]_{t = kT + t_o}$$

De même, en écrivant le gradient de J par rapport à $\theta_m$, on trouve:

$$\frac{\partial J}{\partial \theta_m} = 2E(e'_k Y^k_m + e''_k X^k_m) \quad (16)$$

avec:

$$Y^k_m = Y_m(t)_{t = kT + t_o}$$

et

$$X^k_m = X_m(t)_{t = kT + t_o}$$

En utilisant l'algorithme bien connu du gradient stochastique (voir l'article de C. Macchi et al. cité précédemment), l'adaptation des multiplicateurs $104_o$ à $104_{n-1}$ et $204_o$ à $204_{n-1}$, apportant respectivement des multiplications ou atténuations $r_o, r_1, r_2, \ldots, r_{n-1}$ aux branches de la voie en phase 100 et de la voie en quadrature 200, et l'adaptation des déphaseurs $310_o$ à $310_{n-1}$ et $320_o$ à $320_{n-1}$, fournissant de même les déphasages $\theta_o, \theta_1, \theta_2, \ldots, \theta_{n-1}$ aux n bran-ches de la voie 200, sont réalisées d'après les deux relations suivantes (dans lesquelles m varie toujours de 0 à n-1), qui donnent les expressions des signaux reçus respectivement par ces multiplicateurs et déphaseurs (ces signaux étant identiques pour les branches de même rang des voies 100 et 200):

$$r^{k+1}_m = r^k_m - \alpha \, (p^k_m \, e'_k + q^k_m \, e''_k) \qquad (17)$$

$$\theta^{k+1}_m = \theta^k_m - \beta \, (Y^k_m \, e'_k - X^k_m \, e''_k) \qquad (18)$$

où $\alpha$ et $\beta$ sont des constantes positives représentant le pas de l'algorithme et qui sont suffisamment faibles pour garantir la stabilité de celui-ci.

D'autre part, le gradient de J par rapport à la phase $\phi$ de l'oscillateur 301 s'écrit:

$$\frac{\partial J}{\partial \phi} = 2E \, (e'_k \, Y_k - e''_k \, X_k) \qquad (19) \cdot$$

et cet oscillateur est donc asservi par le signal:

$$\varepsilon_k = e'_k \, Y_k - e''_k \, X_k \qquad (20)$$

ou par une version filtrée de ce signal.

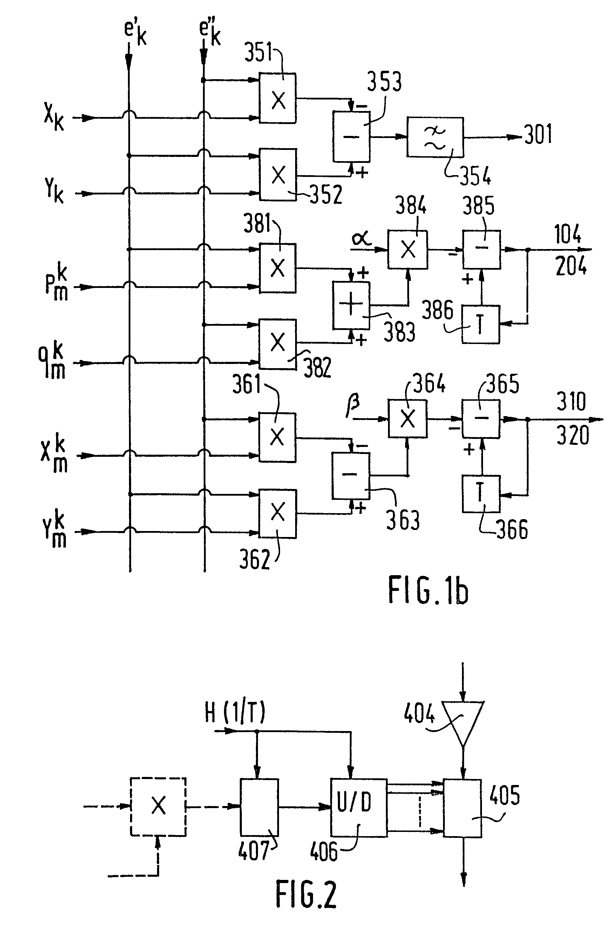

Dans l'exemple du dispositif décrit sur la figure 1a, le circuit d'asservissement 350 de l'oscillateur 301, des déphaseurs $310_o$ à $310_{n-1}$ et $320_o$ à $320_{n-1}$ et des multiplicateurs $104_o$ à $104_{n-1}$ et $204_o$ à $204_{n-1}$ comprend (voir la figure 1b):

(a) pour la commande de l'oscillateur 301 selon l'expression (20), deux circuits de multiplications 351 et 352, un soustracteur 353 des expressions $e'_k Y_k$ et $e''_k X_k$ ainsi obtenues, et un filtre passe-bas de boucle 354 dont la sortie est envoyée vers l'oscillateur 301;

(b) pour la commande de chacun des déphaseurs selon l'expression (18), de même deux circuits de multiplication 361 et 362, un soustracteur 363, un multiplicateur 364 recevant sur sa deuxième entrées le coefficient $\beta$, et un soustracteur 365 associé à un circuit à retard 366 de retard T, la sortie de ce soustracteur étant fournie au déphaseur correspondant des voies 100 et 200;

(c) pour la commande de chacun des multiplicateurs selon l'expression (17), de même deux circuits de multiplication 381 et 382, un additionneur 383, un multiplicateur 384 recevant sur sa deuxième entrée le coefficient $\alpha$, et un soustracteur 385 associé à un circuit à retard 386 de retard T, la sortie de ce soustracteur étant fournie au multiplicateur correspondant des voies 100 et 200.

Bien entendu, la présente invention n'est pas limitée au mode de réalisation qui vient d'être décrit, à partir duquel des variantes peuvent être proposées sans pour cela sortir du cadre de l'invention.

Par exemple, pour l'adaptation des déphaseurs et des multiplicateurs, on peut aussi se contenter des signes de $e'_k$, $e''_k$, $X^k_m$ et $Y^k_m$ et remplacer les expressions (17) et (18) respectivement par les expressions (21) et (22) plus simples à mettre en œuvre:

$$r^{k+1}_m = r^k_m - \alpha \, (sgn \, X^k_m \cdot sgn \, e'_k + sgn \, Y^k_m \cdot sgn \, e''_k) \quad (21)$$

et

$$\theta^{k+1}_m = \theta^k_m - \beta \, (sgn \, Y^k_m \cdot sgn \, e'_k - sgn \, X^k_m \cdot sgn \, e''_k) \quad (22)$$

(dès lors qu'on utilise de la sorte les signes de $e'_k$ $e''_k$, $X^k_m$, $Y^k_m$ au lieu de leur valeur, il est équivalent d'utiliser sgn $X^k_m$ ou sgn $p^k_m$, et de même pour sgn $Y^k_m$ et sgn $q^k_m$, puisque ces termes ont le même signe). De même, une commande simplifiée de l'oscillateur 301 peut être obtenue en remplaçant l'expression (20) par:

$$\varepsilon = sgn \, Y_k \cdot sgn \, e'_k - sgn \, X_k \cdot sgn \, e''_k \qquad (23)$$

Cette variante de réalisation est, concrètement, obtenue à partir de la figure 1b en plaçant, juste avant les entrées des deux circuits de multiplication 351 et 352, des 2n circuits de multiplication 361, 362 et des 2n circuits de multiplication 381, 382, des comparateurs à zéro (non représentés ici).

Par ailleurs, le circuit d'asservissement 350 tel que décrit est de type analogique, mais une variante numérique peut être envisagée, qui modifie, sur la figure 1b, les parties de circuit situées en sortie des multiplicateurs 364, 374, 384, 394. Dans ce cas, les 2n multiplicateurs $104_o$ à $104_{n-1}$ et $204_o$ à $204_{n-1}$ sont remplacés (voir la figure 2) par autant de circuits série comprenant un amplificateur 404 et un atténuateur à commande numérique 405 dont les entrées en parallèle sont reliées aux sorties (en nombre égal) d'un compteur-décompteur 406 lui-même commandé par un comparateur à zéro 407, ce comparateur étant prévu en sortie des multiplicateurs 364 et 384.

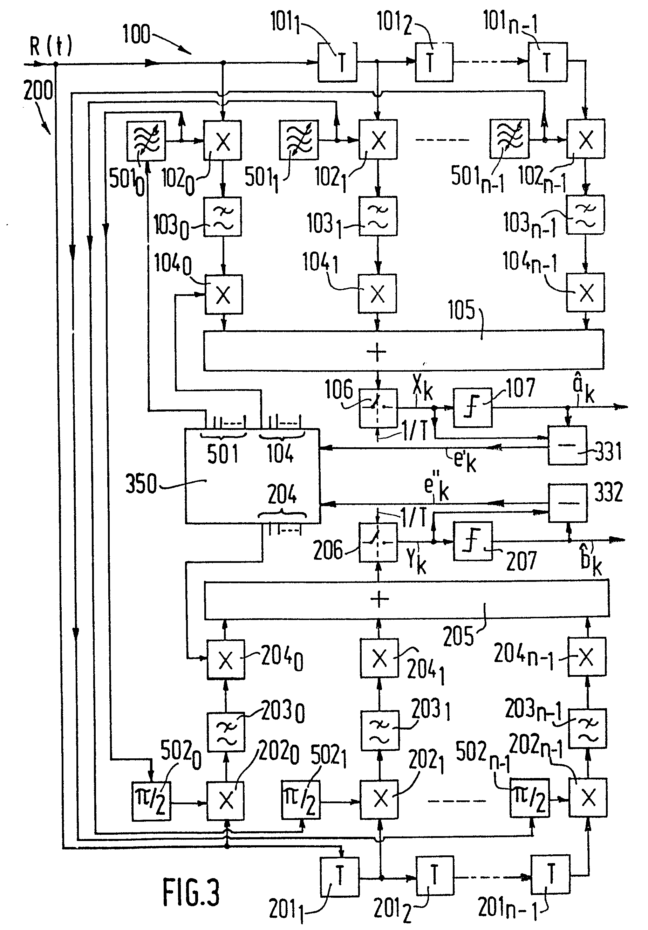

On notera également que, dans un deuxième mode de réalisation représenté sur la figure 3, la fonction de déphasage assurée par les 2n déphaseurs $310_o$ à $310_{n-1}$ et $320_o$ à $320_{n-1}$ peut être dévolue à n oscilla-teurs $501_o$ à $501_{n-1}$ à commande par la tension, commandant directement les mélangeurs $102_o$ à $102_{n-1}$ de la voie en phase 100 et par l'intermédiaire de déphaseurs $502_o$ à $502_{n-1}$ de $\pi/2$ les mélangeurs $202_o$ à $202_{n-1}$ de la voie en quadrature 200; les signaux de commande fournis par le circuit d'asservissement 350 restent identiques, à l'exception du signal de commande de l'oscillateur 301 qui n'existe plus bien entendu, cet oscillateur n'étant plus prévu.

Il est aussi à signaler que la position des multiplicateurs 104 choisie sur la figure 1a n'est pas la seule possible, ces multiplicateurs pouvant être placés en tête des n branches du filtre au lieu de précéder les additionneurs 105 et 205.

Enfin, on s'est limité ici, pour expliquer le principe de fonctionnement, a un égaliseur à structure de filtre transversal sans partie récursive, mais il peut bien sûr comprendre une telle partie récursive sans que l'invention en soit modifiée ou restreinte. Lorsqu'il y a une partie récursive, les entrées de celle-ci peuvent être les décisions antérieures (dans le cas d'un égaliseur non linéaire) ou les versions retardées de la sortie de l'égaliseur (dans le cas d'un égaliseur linéaire).

## Revendications

1. Dispositif d'égalisation adaptive et de démodulation conjointes pour système de transmission numérique, caractérisé en ce qu'il comprend:

(1) une première voie (100) en phase prévue en sortie du canal de transmission du système et dont la structure est celle d'un filtre transversal non récursif à n branches et n-1 circuits à retard (101) entre les n entrées de ces branches, ces n branches comprenant chacune en série:

(a) un mélangeur (102);

(b) un filtre passe-bas (103);

(c) un multiplicateur (104), la sortie de ces n branches étant reliée à un additionneur (105) suivi d'un circuit d'échantillonnage (106) puis d'un circuit de comparaison (107) pour décider des symboles $\hat{a}_k$ à émettre en sortie de cette voie en phase et du dispositif;

(2) en parallèle sur cette première voie, une deuxième voie (200) en quadrature également à structure de filtre transversal non récursif à n branches et n-1 circuits à retard (201) entre les entrées de ces branches, ces n branches comprenant de même chacune en série:

(d) un mélangeur (202);

(e) un filtre passe-bas (203);

(f) un multiplicateur (204), la sortie de ces n branches étant reliée à un additionneur (205) suivi d'un circuit d'échantillonnage (206) puis d'un circuit de comparaison (207) pour décider des symboles $\hat{b}_k$ à émettre en sortie de cette voie en quadrature et du dispositif; les multiplicateurs (104; 204) des première et deuxième voies (100; 200) étant placés dans chaque branche soit en tête, avant les mélangeurs (102; 202) correspondants, soit en sortie des filtres passe-bas (103; 203);

(3) une troisième voie d'asservissement comprenant:

(g) deux circuits de soustraction (331; 332) pour connaître les différences $e'_k$ et $e''_k$ entre les signaux avant décision , $X_k$ et $Y_k$, et après décision, $\hat{a}_k$ et $\hat{b}_k$, dans les circuits de comparaison, exprimées pour la voie en phase et pour la voie en quadrature respectivement par:

$$e'_k = X_k - \hat{a}_k \text{ (avec } X_k = X(t)_{t = kT + t_0})$$

et

$$e'' = Y_k - \hat{b}_k \text{ (avec } Y_k = Y(t)_{t = kT + t_0})$$

où $X(t)$ et $Y(t)$ sont les signaux de sortie du filtre transversal de la voie en phase et de la voie en quadrature respectivement, et où $t_0$ est l'instant d'échantillonage;

(h) un oscillateur (301) à commande par la tension délivrant un signal de type sin $(\omega_0 t + \phi)$ où $\omega_0$ correspond à la fréquence de la porteuse, et qui est commandé par le signal

$$\varepsilon_k = e'_k Y_k - e''_k X_k$$

(i) en sortie de cet oscillateur, n premiers déphaseurs (310) en parallèle, dont la sortie délivre respectivement sur les n deuxièmes entrées des mélangeurs de la voie en phase un signal de démodulation de type sin $(\omega_0 t + \phi + \theta_m)$ où $\theta_m$ est le déphasage pour la $(m + 1)$ième branche et où m varie et o à n-1;

(j) également en sortie de l'oscillateur à commande par la tension, un déphaseur de $\pi/2$ suivi de n deuxièmes déphaseurs (320) en parallèle, dont la sortie délivre sur les n deuxièmes entrées des mélangeurs de la voie en quadrature un signal de démodulation de type cos $(\omega_0 t + \phi + \theta_m)$;

(k) un circuit d'asservissement (350) de l'oscillateur à commande par la tension, des déphaseurs et des multiplicateurs (fig. 1a).

2. Dispositif d'égalisation adaptative et de démodulation conjointes pour système de transmission numérique, caractérisé en ce qu'il comprend:

(1) une première voie (100) en phase prévue en sortie du canal de transmission du système et dont la structure est celle d'un filtre transversal non récursif à n branches et n-1 circuits à retard (101) entre les n entrées de ces branches, ces n branches comprenant chacune en série:

(a) un mélangeur (102);

(b) un filtre passe-bas (103);

(c) un multiplicateur (104), la sortie de ces n branches étant reliée à un additionneur (105) suivi d'un circuit d'échantillonnage (106) puis d'un circuit de comparaison (107) pour décider des symboles $\hat{a}_k$ à émettre en sortie de cette voie en phase et du dispositif;

(2) en parallèle sur cette première voie, une deuxième voie (200) en quadrature également à structure de filtre transversal non récursif à n branches et n-1 circuits à retard (201) entre les n entrées de ces branches, ces n branches comprenant de même chacune en série:

(d) un mélangeur (202);

(e) un filtre passe-bas (203);

(f) un multiplicateur (204), la sortie de ces n branches étant reliée à un additionneur (205) suivi d'un circuit d'échantillonnage (206) puis d'un circuit de comparaison (207) pour décider des symboles $\hat{b}_k$ à émettre en sortie de cette voie en quadrature et du dispositif; les multiplicateurs (104; 204) des première et deuxième voies (100; 200) étant placés dans chaque branche soit en tête, avant les mélangeurs (102; 202) correspondants, soit en sortie des filtres passe-bas (103; 203);

(3) une troisième voie d'asservissement comprenant:

(g) deux circuits de soustraction (331; 332) pour connaître les différences $e'_k$ et $e''_k$ entre les signaux avant décision , $X_k$ et $Y_k$, et après décision, $\hat{a}_k$ et $\hat{b}_k$, dans les circuits de comparaison, exprimées pour la voie en phase et pour la voie en quadrature respectivement par:

$$e'_k = X_k - \hat{a}_k \text{ (avec } X_k = X(t)_{t = kT + t_0})$$

et

$$e'' = Y_k - \hat{b}_k \text{ (avec } Y_k = Y(t)_{t = kT + t_0})$$

où X(t) et Y(t) sont les signaux de sortie du filtre transversal de la voie en phase et de la voie en quadrature respectivement, $t_0$ étant l'instant d'échantillonage;

(h) n oscillateurs (501) à commande par la tension, dont la sortie délivre directement sur les n deuxièmes entrées des mélangeurs (102) de la voie en phase un signal de démodulation de type sin $(\omega_0 t + \phi + \theta_m)$ où $\omega_0$ correspond à la fréquence de la porteuse, où $\theta_m$ est le déphasage pour la (m + 1)ième branche et où m varie de o à n-1, et, par l'intermédiaire d'un déphaseur (502) de $\pi/2$, sur les n deuxièmes entrées des mélangeurs (202) de la voie en quadrature, un signal de démodulation de type cos $(\omega_0 t + \phi + \theta_m)$;

(i) un circuit d'asservissement des oscillateurs à commande par la tension et des multiplicateurs (fig. 3).

3. Dispositif selon la revendication 1, caractérisé en ce que le circuit d'asservissement comprend:

(a) pour délivrer le signal de commande $\varepsilon_k$ de l'oscillateur à commande par la tension, défini par $\varepsilon_k = e'_k Y_k - e'' X_k$, deux circuits de multiplication (351; 352), un soustracteur (353) et un filtre de boucle (354);

(b) pour délivrer le signal de commande $\theta_m^{k+1}$ des 2n déphaseurs des n braches défini par $\theta_m^{k+1} = \theta_m^{k+1} - \beta (Y_m^k e'_k - X_m^k e''_k)$, où $\beta$ est une constante positive inférieure à 1, deux circuits de multiplication (361; 362), un soustracteur (363), un multiplicateur (364), un soustracteur (365) et un circuit à retard (366);

(c) pour délivrer le signal de commande $r_m^{k+1}$ des 2n multiplicateurs des n branches défini par $r_m^{k+1} = r_m^k - \alpha (p_m^k e'_k + q_m^k e''_k)$, où $\alpha$ est une constante positive inférieure à 1, deux circuits de multiplication (381; 382), un additionneur (383), un multiplicateur (384), un soustracteur (385) et un circuit à retard (386).

4. Dispositif selon la revendication 2, caractérisé en ce que le circuit d'asservissement comprend:

(a) pour délivrer le signal de commande $\theta_m^{k+1}$ des n oscillateurs, défini par $\theta_m^{k+1} = \theta_m^k - \beta (Y_m^k e'_k - X_m^k e''_k)$, où $\beta$ est une constante positive inférieure à 1, deux circuits de multiplication (361; 362), un soustracteur (363), un multiplicateur (364), un soustracteur (365) et un circuit à retard (366);

(b) pour délivrer le signal de commande $r_m^{k+1}$ des 2n multiplicateurs des n branches défini par $r_m^{k+1} = r_m^k - \alpha (p_m^k e'_k + q_m^k e''_k)$, où $\alpha$ est une constante positive inférieure à 1, deux circuits de multiplication (381; 382), un additionneur (383), un multiplicateur (384), un soustracteur (385) et un circuit à retard (386).

5. Dispositif selon l'une des revendications 3 et 4, caractérisé en ce que les circuits de multiplication du circuit d'asservissement sont précédés d'autant de comparateurs à zéro.

**Patentansprüche**

1. Schaltungsanordnung zur kombinierten adaptiven Entzerrung und Demodulation zum Gebrauch in einem digitalen Übertragungssystem, dadurch gekennzeichnet, dass sie die folgenden Elemente aufweist:

(1) eine erste Inphase-Strecke (100), die an den Ausgang des Übertragungskanals des Systems angeschlossen ist und deren Struktur diejenige eines nicht rekursiven Transversalfilters mit n Zweigen und (n-1) Verzögerungsschaltungen (101) zwischen den Eingängen dieser Zweige ist, wobei diese n Zweige je in Reihe die folgenden Elemente enthalten:

(a) eine Mischstufe (102);
(b) ein Tiefpassfilter (103);
(c) einen Multiplizierer (104);

wobei der Ausgang dieser n Zweige an einen Addierer (105) angeschlossen ist, dem eine Abtastschaltung (106) sowie eine Vergleichsschaltung (107) folgen zum Treffen von Entscheidungen in bezug auf die Symbole $\hat{a}_k$, die vom Ausgang dieser Inphase-Strecke und dieser Schaltungsanordnung abgegeben werden sollen;

(2) parallel zu dieser ersten Strecke eine zweite Quadraturstrecke (200) ebenfalls mit der Struktur eines nicht rekursiven Transversalfilters mit n Zweigen und (n-1) Verzögerungsschaltungen (201) zwischen den Eingängen dieser Zweige, wobei diese n Zweige ebenfalls je in Reihe enthalten:

(d) eine Mischstufe (202);
(e) ein Tiefpassfilter (203);
(f) einen Multiplizierer (204);

wobei der Ausgang dieser n Zweige an einen Addierer (205) angeschlossen ist, dem eine Abtastschaltung (206) sowie eine Vergleichsschaltung (207) folgen zum Treffen von Entscheidungen in bezug auf die Symbole $\hat{b}_k$, die von dem Ausgang dieser Quadraturstrecke und dieser Schaltungsanordnung abgegeben werden sollen;

wobei die Multiplizierer (104, 204) der ersten und zweiten Strecke (100; 200) in jedem Zweig entweder vorne, vor den entsprechenden Mischstufen (102; 202), oder am Ausgang der Tiefpassfilter (103; 203) vorgesehen sind;

(3) eine dritte Regelstrecke, welche die folgenden Elemente enthält:

(g) zwei Subtrahierer (331; 332) zum Ermitteln der Differenzen $e'_k$ und $e''_k$ zwischen den Signalen vor der Entscheidung, $X_k$ und $Y_k$, und nach der Entscheidung, $\hat{a}_k$ und $\hat{b}_k$, in den Vergleichsschaltungen, die für die Inphase-Strecke bzw. die Quadraturstrecke wie folgt ausgedrückt werden:

$$e'_k = X_k - \hat{a}_k \text{ (mit } X_k = X(t)_{t = kT + t_0})$$

und

$$e'' = Y_k - \hat{b}_k \text{ (mit } Y_k = Y(t)_{t = kT + t_0})$$

wobei X(t) und Y(t) Ausgangssignale des Transversalfilters der Inphase-Strecke bzw. der Quadraturstrecke sind und wobei $t_0$ der Abtastzeitpunkt ist;

(h) einen spannungsgesteuerten Oszillator (301), der ein Signal vom Typ sin $(\omega_0 t + \phi)$ liefert, wobei

$\omega_o$ der Trägerfrequenz entspricht und der von dem folgenden Signal gesteuert wird

$$\varepsilon_k = e'_k Y_k - e''_k X_k$$

(i) an dem Ausgang dieses Oszillators n erste parallelgeschaltete Phasenschieber (310), deren Ausgang den n zweiten Eingängen der Mischstufen der Inphase-Strecke ein Demodulationssignal vom Typ $\sin(\omega_o t + \varphi + \theta_m)$ liefert, wobei $\theta_m$ die Phasenverschiebung für den $(m+1)$. Zweig ist und wobei m zwischen 0 und n-1 variiert;

(j) ebenfalls an dem Ausgang des spannungsgesteuerten Oszillators einen $\pi/2$-Phasenschieber, dem n zweite parallelgeschaltete Phasenschieber (320) folgen, deren Ausgang den n zweiten Eingängen der Mischstufen der Quadraturstrecke ein Demodulationssignal vom Typ $\cos(\omega_o t + \varphi + \theta_m)$ liefert;

(k) eine Regelschaltung (350) für den spannungsgesteuerten Oszillator, die Phasenschieber und die Multiplizierer (Fig. 1a).

2. Schaltungsanordnung zur kombinierten adaptativen Entzerrung und Demodulation zum Gebrauch in einem digitalen Übertragungssystem, dadurch gekennzeichnet, dass diese Anordnung die folgenden Elemente aufweist:

(1) eine erste Inphase-Strecke (100), die an den Ausgang des Übertragungskanals des Systems angeschlossen ist und deren Struktur diejenige eines nicht rekursiven Transversalfilters mit n Zweigen und (n-1) Verzögerungsschaltungen (101) zwischen den Eingängen dieser Zweige ist, wobei diese n Zweige je in Reihe die folgende Elemente enthalten:

   (a) eine Mischstufe (102);
   (b) ein Tiefpassfilter (103);
   (c) einen Multiplizierer (104);

wobei der Ausgang dieser n Zweige an einen Addierer (105) angeschlossen ist, dem eine Abtastschaltung (106) sowie eine Vergleichsschaltung (107) folgen zum Treffen von Entscheidungen in bezug auf die Symbole $\hat{a}_k$, die vom Ausgang dieser Inphase-Strecke und dieser Schaltungsanordnung abgegeben werden sollen;

(2) parallel zu dieser ersten Strecke eine zweite Quadraturstrecke (200) ebenfalls mit der Struktur eines nicht rekursiven Transversalfilters mit n Zweigen und (n-1) Verzögerungsschaltungen (201) zwischen den Eingängen dieser Zweige, wobei diese n Zweige ebenfalls je in Reihe enthalten:

   (d) eine Mischstufe (202);
   (e) ein Tiefpassfilter (203);
   (f) einen Multiplizierer (204);

wobei der Ausgang dieser n Zweige an einen Addierer (205) angeschlossen ist, dem eine Abtastschaltung (206) sowie eine Vergleichsschaltung (207) folgen zum Treffen von Entscheidungen in bezug auf die Symbole $\hat{b}_k$, die von dem Ausgang dieser Quadraturstrecke und dieser Schaltungsanordnung abgegeben werden sollen; wobei die Multiplizierer (104, 204) der ersten und zweiten Strecke (100; 200) in jedem Zweig entweder vorne, vor den entsprechenden Mischstufen (102; 202), oder am Ausgang der Tiefpassfilter (103; 203) vorgesehen sind;

(3) eine dritte Regelstrecke, welche die folgenden Elemente enthält:

(g) zwei Subtrahierer (331; 332) zum Ermitteln der Differenzen $e'_k$ und $e''_k$ zwischen den Signalen vor der Entscheidung, $X_k$ und $Y_k$, und nach der Entscheidung, $\hat{a}_k$ und $\hat{b}_k$, in den Vergleichsschaltungen, die für die Inphase-Strecke bzw. die Quadraturstrecke wie folgt ausgedrückt werden:

$$e'_k = X_k - \hat{a}_k \quad (\text{mit } X_k = X(t)_{t = kT + t_0})$$

und

$$e'' = Y_k - \hat{b}_k \quad (\text{mit } Y_k = Y(t)_{t = kT + t_0})$$

wobei $X(t)$ und $Y(t)$ Ausgangssignale des Transversalfilters der Inphase-Strecke bzw. der Quadraturstrecke sind und wobei $t_0$ der Abtastzeitpunkt ist;

(h) n spannungsgesteuerte Oszillatoren (501), deren Ausgang den n zweiten Eingängen der Mischstufen (102) der Inphase-Strecke unmittelbar ein Demodulationssignal vom Typ $\sin(\omega_o t + \varphi + \theta_m)$ liefert, wobei $\omega_o$ der Trägerfrequenz entspricht, $\theta_m$ die Phasenverschiebung für den $(m+1)$. Zweig ist und wobei m zwischen 0 und n-1 variiert, sowie mittels eines $\pi/2$-Phasenschiebers (502) den n zweiten Eingängen (202) der Quadraturstrecke ein Demodulationssignal vom Typ $\cos(\omega_o t + \varphi + \theta_m)$ liefert;

(i) eine Regelschaltung für die spannungsgesteuerten Oszillatoren und die Multiplizierer (Fig. 3).

3. Schaltungsanordnung nach Anspruch 1, dadurch gekennzeichnet, dass die Regelschaltung die folgenden Elemente aufweist:

(a) zum Liefern des Steuersignals $\varepsilon_k$ des spannungsgesteuerten Oszillators, das durch $\varepsilon_k = e'_k Y_k - e''_k X_k$ definiert wird: zwei Multiplizierer (351, 352), einen Subtrahierer (353) und ein Schleifenfilter (354);

(b) zum Liefern des Steuersignals $\theta_m^{k+1}$ der 2n Phasenschieber der n Zweige, das durch $\theta_m^{k+1} = \theta_m^k - \beta (Y_m^k e'_k - X_m^k e''_k)$ definiert wird, wobei $\beta$ eine positive Konstante kleiner als 1 ist: zwei Multiplizierer (361, 362), einen Subtrahierer (363), einen Multiplizierer (364), einen Subtrahierer (365) und eine Verzögerungsschaltung (366);

(c) zum Liefern des Steuersignals $r_m^{k+1}$ der 2n Multiplizierer der n Zweige, das durch $r_m^{k+1} = r_m^k - \alpha (p_m^k e'_k + q_m^k e''_k)$ definiert wird, wobei $\alpha$ eine positive Konstante kleiner als 1 ist: zwei Multiplizierer (381, 382), einen Addierer (383), einen Multiplizierer (384), einen Subtrahierer (385) und eine Verzögerungsschaltung (386).

4. Schaltungsanordnung nach Anspruch 2, dadurch gekennzeichnet, dass die Regelschaltung die folgenden Elemente enthält:

(a) zum Liefern des Steuersignals $\theta_m^{k+1}$ der n Oszillatoren, das durch $\theta_m^{k+1} = \theta_m^k - \beta (Y_m^k e'_k - X_m^k e''_k)$ definiert wird, wobei $\beta$ eine positive Konstante kleiner als 1 ist: zwei Multiplizierer (361, 362), einen Subtrahierer (363), einen Multiplizierer (364), einen Subtrahierer (365) und eine Verzögerungsschaltung (366);

(b) zum Liefern des Steuersignals $r_m^{k+1}$ der 2n Multiplizierer der n Zweige, das durch $r_m^{k+1} = r_m^k - \alpha (p_m^k e'_k + q_m^k e''_k)$ definiert wird, wobei $\alpha$ eine positive Konstante kleiner als 1 ist: zwei Multiplizierer (381, 382), einen Addierer (383), einen Multiplizierer (384), einen Subtrahierer (385) und eine Verzögerungsschaltung (386).

5. Schaltungsanordnung nach einem der Ansprüche 3 und 4, dadurch gekennzeichnet, dass den Multiplizierern der Regelschaltung gleich viele Nullvergleichsschaltungen vorhergehen.

## Claims

1. A joint adaptive equalization and demodulation arrangement for a digital transmission system, characterized in that it comprises:

(1) a first in-phase path (100) provided at the output of the transmission channel of the system and whose structure is that of a non-recursive transversal filter having n branches and (n-1) delay circuits (101) between the n inputs of these branches, each of these n branches comprising, arranged in series:

    (a) a mixer (102);

    (b) a low-pass filter (103);

    (c) a multiplier (104);

the output of these n branches being connected to an adder (105) which is followed by a sampling circuit (106) and thereafter by a comparator circuit (107) for deciding the symbols $\hat{a}_k$ to be transmitted from the output of this in-phase path and of the arrangement;

(2) arranged in parallel with this first path, a second quadrature path (200) which also has the structure of a non-recursive transversal filter having n branches and (n-1) delay circuits (201) between the inputs of these branches, each of these n branches also comprising, arranged in series:

    (d) a mixer (202);

    (e) a low-pass filter (203);

    (f) a multiplier (204);

the output of these n branches being connected to an adder (205) which is followed by a sampling circuit (206) and by a comparator circuit (207) for deciding the symbols $\hat{b}_k$ to be transmitted from the output of this quadrature path and of the arrangement;

the multipliers (104; 204) of these first and second paths (100; 200) being placed in each branch either at the head, before the corresponding mixers (102; 202), or at the output of the low-pass filters (103; 203);

(3) a third control path comprising:

(g) two subtracting circuits (331; 332) for determining the differences $e'_k$ and $e''_k$ between the signals before decision $X_k$ and $Y_k$, and after decision, $\hat{a}_k$ and $\hat{b}_k$, in the comparator circuits, expressed respectively for the in-phase path and for the quadrature path by:

$$e'_k = X_k - \hat{a}_k \text{ (where } X_k = X(t)_{t = kT + t_0})$$

and

$$e''_k = Y_k - \hat{b}_k \text{ (where } Y_k = Y(t)_{t = kT + t_0})$$

where $X(t)$ and $Y(t)$ are the output signals of the transversal filter of the in-phase path and the quadrature path, respectively, and $t_0$ is the sampling instant;

(h) a voltage-controlled oscillator (301) producing a signal of the type $\sin(\omega_0 t + \theta)$ where $\omega_0$ corresponds to the frequency of the carrier, which oscillator is controlled by the signal

$$\varepsilon_k = e'_k Y_k - e''_k X_k;$$

(i) at the output of this oscillator, n first parallel-arranged phase shifters (310), whose outputs apply to the respecitve n second inputs of the mixers in the in-phase path a demodulation signal of the type $\sin(\omega_0 t + \theta + \theta_m)$ where $\theta_m$ is the phase shift for the $(m+1)^{st}$ branch and m varies from o to (n-1);

(j) also at the output of the voltage-controlled oscillator, a $\pi/2$ phase shifter followed by n second parallel-arranged phase shifters (320), whose outputs apply to the n second inputs of the mixers in the quadrature path a demodulation signal of the type $\cos(\omega_0 t + \theta + \theta_m)$;

(k) a control circuit (350) for the voltage-controlled oscillator, the phase shifters and the multipliers (Fig. 1a).

2. A joint adaptive equalization and demodulation arrangement for a digital transmission system, characterised in that it comprises:

(1) a first in-phase path (100) provided at the output of the transmission channel of the system and whose structure is that of a non-recursive transversal filter having n branches and (n-1) delay circuits (101) between the n inputs of these branches, each of these n branches comprising, arranged in series:

    (a) a mixer (102);

    (b) a low-pass filter (103);

    (c) a multiplier (104);

the output of these n branches being connected to an adder (105) which is followed by a sampling circuit (106) and thereafter by a comparator circuit (107) for deciding the symbols $\hat{a}_k$ to be transmitted from the output of this in-phase path and of the arrangement;

(2) arranged in parallel with this first path, a second quadrature path (200) which also has the structure of a non-recursive transversal filter having n branches and (n-1) delay circuits (201) between the inputs of these branches, each of these n branches also comprising, arranged in series:

    (d) a mixer (202);

    (e) a low-pass filter (203);

    (f) a multiplier (204);

the output of these n branches being connected to an adder (205) which is followed by a sampling circuit (206) and by a comparator circuit (207) for deciding the symbols $\hat{b}_k$ to be transmitted from the output of this quadrature path and of the arrangement;

the multipliers (104; 204) of these first and second paths (100; 200) being placed in each branch either at the head, before the corresponding mixers (102; 202), or at the output of the low-pass filters (103; 203);

(3) a third control path comprising:

(g) two subtracting circuits (331; 332) for determining the differences $e'_k$ and $e''_k$ between the signals before decision $X_k$ and $Y_k$, and after decision, $\hat{a}_k$ and $\hat{b}_k$, in the comparator circuits, expressed respectively for the in-phase path and for the quadrature path by:

$$e'_k = X_k - \hat{a}_k \text{ (where } X_k = X(t)_{t = kT + t_0})$$

and

$$e''_k = Y_k - \hat{b}_k \text{ (where } Y_k = Y(t)_{t = kT + t_o})$$

where $X(t)$ and $Y(t)$ are the output signals of the transversal filter of the in-phase path and the quadrature path, respectively, and $t_o$ is the sampling instant;

(h) n voltage-controlled oscillators (501) whose outputs apply to the respective n second inputs of the mixers (102) in the in-phase path a demodulation signal of the type sin $(\omega_o t + \theta + \theta_m)$, where $\omega_o$ corresponds to the frequency of the carrier, $\theta_m$ is the phase shift for the $(m+1)^{st}$ branch and where m varies from o to (n-1), and by means of a $\pi/2$ phase shifter (502) apply a demodulation signal of the type cos $(\omega_o t + \theta + \theta_m)$ to the respective n second inputs of the mixers (202) of the quadrature path;

(i) a control circuit for the voltage-controlled oscillators and the multipliers (Fig. 3).

3. An arrangement as claimed in claim 1, characterized in that the control circuit comprises:

(a) two multipliers (351; 352), a substractor (353) and a loop filter (354) to supply the control signal $\varepsilon_k$ for the voltage-controlled oscillator, defined by: $\varepsilon_k = e'_k Y_k - e''_k X_k$;

(b) two multipliers (361; 362), a subtractor (363), a multiplier (364) a subtractor (365) and a delay circuit (366) to supply the control signal $\theta_m^{k+1}$ for the 2n phase shifters in the n branches defined by: $\theta_m^{k+1} = \theta_m^k - \beta (Y_m^k e'_k - X_m^k e''_k)$ where $\beta$ is a positive constant less than 1;

(c) two multipliers (381; 382), an adder (383), a multiplier (384), a subtractor (385) and a delay circuit (386) to supply the control signal $r_m^{k+1}$ for the 2n multipliers in the n branches defined by: $r_m^{k+1} = r_m^k - \alpha (p_m^k e'_k + q_m^k e''_k)$ where $\alpha$ is a positive constant less than 1.

4. An arrangement as claimed in claim 2, characterized in that the control circuit comprises:

(a) two multipliers (361; 362), a subtractor (363), a multiplier (364) a subtractor (365) and a delay circuit (366) to supply the control signal $\theta_m^{k+1}$ for the n oscillators defined by: $\theta_m^{k+1} = \theta_m^k - \beta (Y_m^k e'_k - X_m^k e''_k)$ where $\beta$ is a positive constant less than 1;

(b) two multipliers (381; 382), an adder (383), a multiplier (384), a subtractor (385) and a delay circuit (386) to supply the control signal $r_m^{k+1}$ for the 2n multipliers of the n branches defined by: $r_m^{k+1} = r_m^k - \alpha (p_m^k e'_k + q_m^k e''_k)$ where $\alpha$ is a positive constant less than 1.

5. Arrangement as claimed in one of the claims 3 and 4, characterised in that the multipliers of the control circuit are preceded by a same number of zero-comparators.

FIG.1a

FIG.1b

FIG.2

FIG.3